# EUROPEAN PATENT SPECIFICATION

(11) **EP 4 186 358 B1**
(45) Date of publication and mention of the grant of the patent: **22.04.2026**
(21) Application number: 21211442.5
(22) Date of filing: 30.11.2021
(51) Int. Cl.: A01J 25/11

(54) **WHEY DRAINING APPARATUS AND METHOD**
VORRICHTUNG ZUM ENTWÄSSERN VON MOLKE UND VERFAHREN
APPAREIL DE DRAINAGE DE LACTOSÉRUM ET PROCÉDÉ

(43) Date of publication of application: 31.05.2023
(73) Proprietor: Tetra Laval Holdings & Finance S.A., 1009 Pully (CH)
(72) Inventor: PRUSACZYK, Michal, 07-438 Zalas (PL)
(74) Representative: Tetra Pak Patent Attorneys

(56) References cited:
- CA-A1- 2 365 273
- US-A- 3 606 683

## Description

### Technical Field

The invention relates to a method and system for producing blocks of cheese mass, where a whey draining apparatus having an upright drainage column is used to drain whey and form cheese mass from a mixture of curd and whey.

### Background

Different types of cheese may be produced using different types of production processes. In one exemplary production process, a final treatment of the cheese curd that has been formed from a milk raw material may include using a block former for producing well-formed uniform blocks of cheese mass. The cheese mass may be referred to as cheese, even though it is often stored for a period of time for maturing such that it can eventually be sold as "cheese".

Curd particles are received in a top of the block former tower or column. The tower is filled with the particles of curd and the curd begins to fuse into a continuous columnar mass or pillar. A vacuum is applied to the column for removing whey and air from the curd to form the cheese. After the pillar of curd has descended through the block former tower over a predetermined distance, a lower portion of the pillar of curd is severed with a cutting tool, such as a guillotine blade. Regular blocks of identical or nearly identical size are automatically cut and ejected from the block former for conveying to a vacuum sealing unit located downstream along the cheese production line. Patent document CA2365273A1 describes an example of a block former that is used in cheese production.

Current block formers successfully produce blocks of cheese. However, current block formers may sometimes be deficient in providing sufficient draining and compaction of the curd. Current block formers may not be suitable for forming semi-hard cheeses, such as gouda. There is also a general need of making block forming more efficient.

### Summary

It is an object of the invention to at least partly overcome one or more limitations of the prior art. In particular, it is an object to provide a whey draining apparatus that is configured to more efficiently produce blocks of cheese that are sufficiently compacted and drained of whey.

In a first aspect, the above mentioned objective is achieved with the apparatus according to claim 1.

The whey draining apparatus described herein is advantageous in that the auger is rotated and moved linearly to provide compaction of curd below the auger. The auger is moved upwardly and downwardly to push the cheese downwardly in the upright drainage column toward the outlet which enables a faster compaction of the curd as compared with conventional block formers that rely primarily on gravity as the curd descends through the column. The auger may also be configured to release the cheese without an additional dosing plate arranged below the upright drainage column, in contrast to conventional block formers that require dosing plates. Still another advantage of the whey draining apparatus is that the whey draining apparatus may include a plurality of different perforated draining sections to enable sufficient draining of whey from the mixture of curd and whey during compaction of the curd.

In a second aspect, the above mentioned objective is achieved with a method according to claim 12.

Still other objectives, features, aspects and advantages of the invention will appear from the following detailed description as well as from the drawings.

### Brief Description of Drawings

Embodiments of the invention will now be described, by way of example, with reference to the accompanying schematic drawings.
Fig. 1 is a side view of a whey draining apparatus for producing blocks of cheese.
Fig. 2 is a sectional view of the whey draining apparatus shown in Fig. 1.
Fig. 3 is a perspective sectional view of the whey draining apparatus shown in Fig. 1.
Fig. 4 is a detailed sectional view of a upright drainage column of the whey draining apparatus shown in Fig. 1.
Fig. 5 is a detailed sectional view of a pusher of the whey draining apparatus shown in Fig. 1.
Figs. 6a-6m shows the whey draining apparatus of Fig. 1 during operation of the whey draining apparatus.
Fig. 7 is a flow chart of a method of draining whey from a mixture of curd and whey using the whey draining apparatus shown in Fig. 1.

### Detailed Description

Embodiments of the apparatus and the method will now be described more fully hereinafter with reference to the accompanying drawings. The invention is defined by the appended claims.

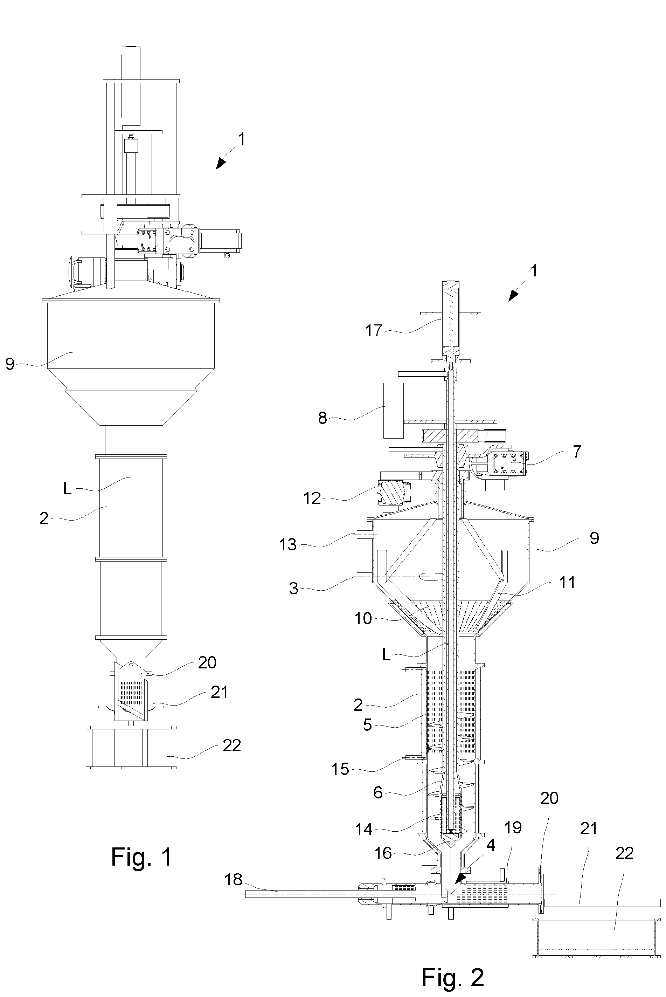

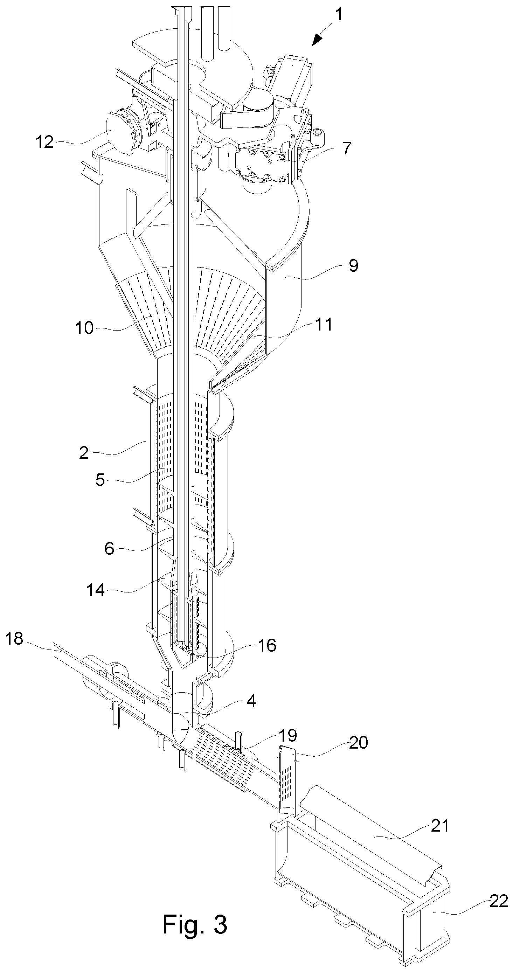

With reference to Figs. 1-3, an exemplary whey draining apparatus 1 for producing blocks of cheese is illustrated. The whey draining apparatus 1 is arranged along a cheese production line to receive a mixture of cheese curd and whey at a location that is downstream from a location at which cheese curd is produced. The whey draining apparatus 1 is used to drain whey to produce blocks of cheese. The blocks of cheese may be further processed downstream the whey draining apparatus 1. Examples of types of cheese that may be formed using the whey draining apparatus 1 include hard cheeses and semi-hard cheeses, such as cheddar cheese, gouda, and mozzarella. Other types of cheese may also be formed using the whey draining apparatus 1.

The whey draining apparatus 1 includes an upright drainage column 2 and a feed inlet 3 for a mixture of curd and whey arranged upstream of the upright drainage column 2. The upright drainage column 2 may be vertical or angled relative to a vertical axis by an angle that is 45 degrees or less. The feed inlet 3 is positioned approximate a top end of the upright drainage column 2. The feed inlet 3 may be arranged above the upright drainage column 2. The upright drainage column 2 is configured to receive the mixture of curd and whey downstream the feed inlet 3 and has an outlet 4. The compacted curd that is drained of whey is discharged from the upright drainage column 2 through the outlet 4. The outlet 4 is arranged at a lower end of the upright drainage column 2 opposite the feed inlet 3 and may be defined as part of the upright drainage column 2. The outlet 4 may be a lowermost part of the upright drainage column 2.

The upright drainage column 2 may be formed as a flat steel tube and includes a perforated section 5 for draining whey from the mixture of curd and whey received in the upright drainage column 2. The perforated section 5 may be formed along an upper portion of the upright drainage column 2. The perforated section 5 may be formed along a length of the upright drainage column 2 that is approximately one half of a total height of the upright drainage column 2. The perforated section 5 may be formed along a length of the upright drainage column 2 that is greater than or less than one half of the total height of the upright drainage column 2.

An auger 6 is arranged along a longitudinal axis L of the upright drainage column 2. The auger 6 is configured for rotation about the longitudinal axis L to compact the mixture of curd and whey in the upright drainage column 2. The auger 6 is also configured for linear movement along the longitudinal axis L to push compacted curd that is drained of whey through the outlet 4 and out of the upright drainage column 2. Using the auger 6 enables rapid compaction of the curd which is pushed below the auger 6 toward the outlet 4 in contrast to conventional block formers that require a dosing plate below the column.

The auger 6 may extend through most of a length of the upright drainage column 2. The whey draining apparatus 1 may include a first motor 7 for rotating the auger 6. A second motor 8 that is independent of the first motor 7 is configured to axially move the auger 6 along the longitudinal axis L. The auger 6 is configured for bidirectional linear movement through the upright drainage column 2 in that the auger 6 continuously moves up and down during operation. Any suitable drive motors may be used. The motors may include pneumatic or hydraulic drive cylinders.

The whey draining apparatus 1 includes a buffer tank 9 having a perforated conical section 10 arranged upstream the upright drainage column 2. The perforated conical section 10 is formed along a lower portion of the buffer tank 9. The buffer tank 9 has a larger diameter as compared with the diameter of the upright drainage column 2. The feed inlet 3 may be formed on the buffer tank 9 such that the mixture of curd and whey is received in the buffer tank 9. The feed inlet 3 may be formed at a middle portion of the buffer tank 9 and at an upper end of the perforated conical section 10. The auger 6 may extend upwardly through the buffer tank 9 to the motors 7, 8 that are arranged above the buffer tank 9.

The perforated conical section 10 may be formed as a perforated steel plate and is tapered downwardly toward the upright drainage column 2 arranged below the buffer tank 9. The perforated conical section 10 is connected to a top of the upright drainage column 2. In the buffer tank 9, an amount of whey is drained from the mixture of curd and whey via the perforated conical section 10. The perforated conical section 10 of the buffer tank 9 may form a first draining section and the perforated section 5 of the upright drainage column 2 may form a second draining section downstream the first draining section.

An agitator 11 is arranged for rotation in the buffer tank 9 for mixing the curd and whey mixture. A drive motor 12 rotates the agitator 11 along the perforated conical section 10. The agitator 11 has at least one blade that move close to the perforated conical section 10 to prevent blockage of the holes in the perforated conical section 10 by the curd particles.

An overflow conduit 13 is provided on the buffer tank 9 to control an amount of whey in the buffer tank 9, such that if an amount of whey exceeds a certain height within the buffer tank 9, the excess whey will be removed through the overflow conduit 13. The overflow conduit 13 is arranged at an upper portion of the buffer tank 9. The overflow conduit 13 is arranged at a location that is higher relative to the feed inlet 3.

The auger 6 has helical flights 14 that are integrally formed as part of the auger 6 and extend radially outwardly. The helical flights 14 may be formed on only a portion of the auger 6. The helical flights 14 are configured to rotate and move linearly along the perforated section 5 to compact the curd downwardly below the auger 6 and toward the outlet 4 of the upright drainage column 2. The amount of rotation and linear movement of the auger 6 is adjustable based on the compression required to produce a desired type of cheese. The helical flights 14 are arranged to move close to the perforated section 5 to prevent blockage of the holes of the perforated section 5 by the curd particles.

A whey removing conduit 15 is provided on an upper portion of the upright drainage column 2 to remove drained whey from the upright drainage column 2 that has been drained via the perforated section 5. **The** whey removing conduit 15 may be arranged to surround the perforated section 5.

A plunger 16 is arranged to move along the longitudinal axis L inside the auger 6 to push the compacted curd out of the upright drainage column 2. **The** plunger 16 is moved by a linear actuator 17 and is configured to descend lower in the upright drainage column 2 relative to the auger 6 such that the plunger 16 is able to push out a last part of the compacted curd from the upright drainage column 2. **The** linear actuator 17 may include a pneumatic or hydraulic cylinder. **The** plunger 16 extends through most of the length of the upright drainage column 2 with the plunger 6. **The** plunger 16 may extend upwardly through the buffer tank 9 to the linear actuator 17 arranged above the buffer tank 9.

Below the upright drainage column 2, a pusher 18 is arranged proximate the outlet 4 for pushing compacted curd that is discharged out of the outlet 4 downstream for further processing. **The** pusher 18 may be arranged perpendicular relative to the upright drainage column 2, such that the curd is pushed in a direction that is perpendicular to the direction in which the curd is discharged from the outlet 4. **The** compacted curd is received in a perforated tube 19 that is arranged downstream the outlet 4. **The** perforated tube 19 is connected to the upright drainage column 2 and may be arranged perpendicular to the upright drainage column 2. **The** perforated tube 19 may be aligned with the pusher 18 and is configured to receive the pusher 18 such that extruded cheese is pushed through the perforated tube 19 by the pusher 18 entering the perforated tube 19.

**The** perforated tube 19 is arranged upstream a cutting tool 20 that is spaced from the outlet 4 of the upright drainage column 2. **The** cutting tool 20 may be a guillotine knife that is supported at an end of the perforated tube 19 opposite to where the perforated tube 19 is connected to the upright drainage column 2. A shutter plate 21 is arranged downstream the cutting tool 20 to receive a cut-off portion of the compacted cheese. A mold 22 is arranged downstream the shutter plate 21 and is configured to receive the cut-off portion of the compacted cheese from the shutter plate 21 for molding the cheese block and further downstream processing, such as packaging.

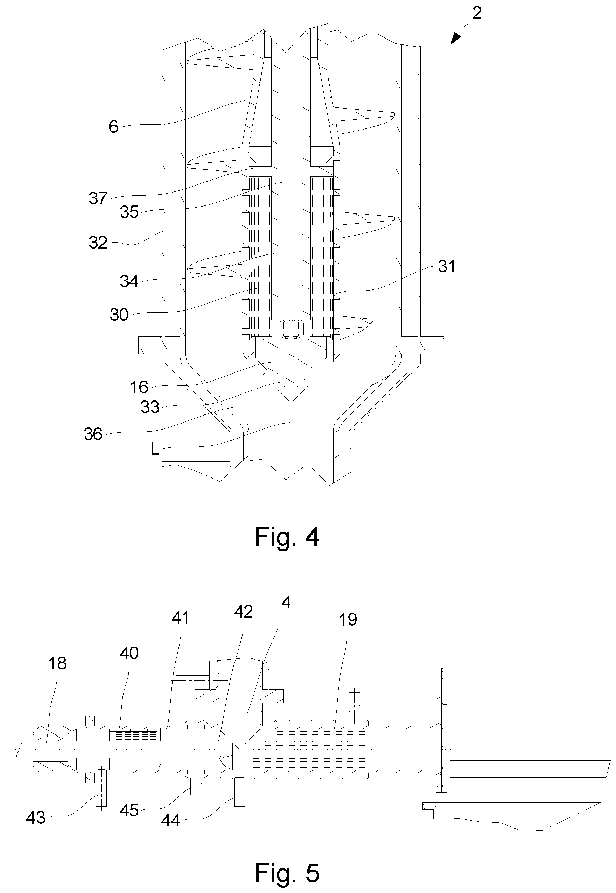

Referring in addition to Fig. 4, the auger 6 has a hollow body 30 that extends along the longitudinal axis L of the upright drainage column 2 and a perforated peripheral surface 31 for draining whey from the mixture of curd and whey to the inside of the hollow body 30. The perforated peripheral surface 31 may be selectively activated during operation of the whey draining apparatus 1.

A cooling and heating channel 32 is formed along a periphery of the upright drainage column 2 for cooling or heating the upright drainage column 2. The cooling and heating 32 is used to maintain operating parameters of the whey draining apparatus 1 when pressure occurs in the whey draining apparatus 1. The cooling and heating channel 32 may extend along a lower portion of the upright drainage column 2.

The plunger 16 includes a conical nose 33 that is pointed downwardly in the upright drainage column 2 and a hollow body 34 that defines a whey-draining channel 35. The whey-draining channel 35 is arranged along the longitudinal axis L and the conical nose 33 is configured to extend into a tapering portion 36 of the upright drainage column 2 that tapers toward the outlet 4. The plunger 16 may be formed to have a radially-extending locating tab 37 to position the plunger 16 in the auger 6. The inside of the hollow body 30 of the auger 6 may be in communication with a vacuum that draws the drained whey upwardly and out of the upright drainage column 2. The hollow bodies 30, 34 of the auger 6 and the plunger 16 may also be configured to enable cleaning-in-place of the components during a cleaning operation that occurs after the cheese production operation.

Referring in addition to Fig. 5, the pusher 18 has a perforated section 40 for draining whey and a blocking section 41 for blocking the outlet 4 of the upright drainage column. The perforated section 40 and the blocking section 41 may be formed adjacent to each other along the peripheral surface of the pusher 18. The pusher 18 is linearly movable between a blocking position in which the blocking section 41 blocks the outlet 4, prior to extrusion of the cheese, and a draining position in which the outlet 4 is opened for extrusion of the cheese, and the perforated section 40 is in communication with the outlet 4 to enable further draining of the compacted curd.

The pusher 18 is configured to push the compacted curd from the outlet 4 into the perforated tube 19. An angular channel 42 is connected between the outlet 4 and the perforated tube 19 to provide a shear deformation of the compacted curd and remove more of the whey from the compacted curd. Whey removing zones 43, 44 may be formed on the pusher 18 and the perforated tube 19 for removing the drained whey from the whey draining apparatus 1. A rinsing zone 45 for may be formed on the pusher 18 for cleaning the pusher 18 during a cleaning operation.

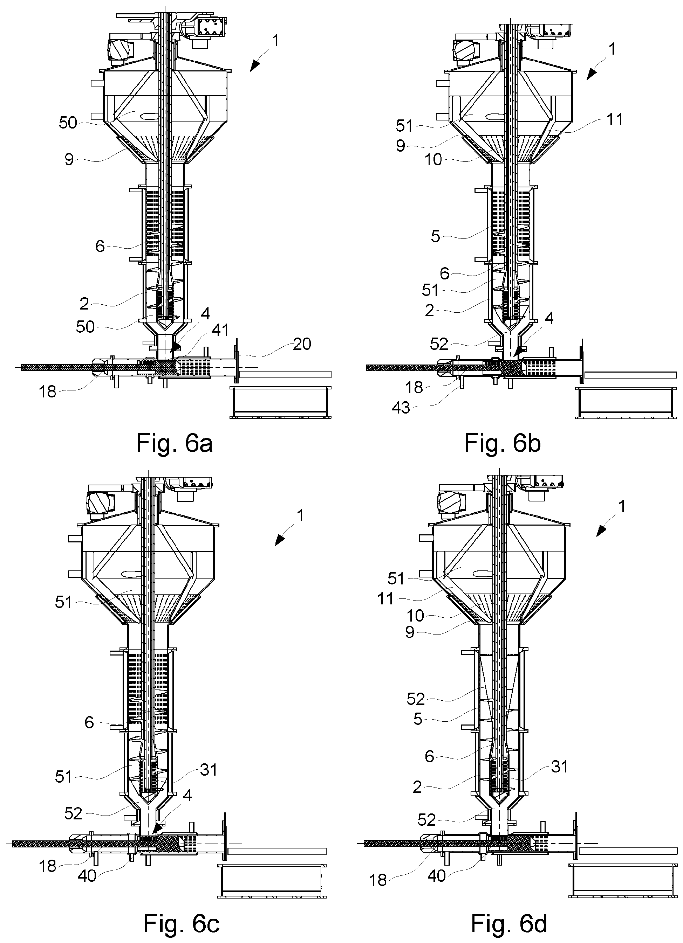

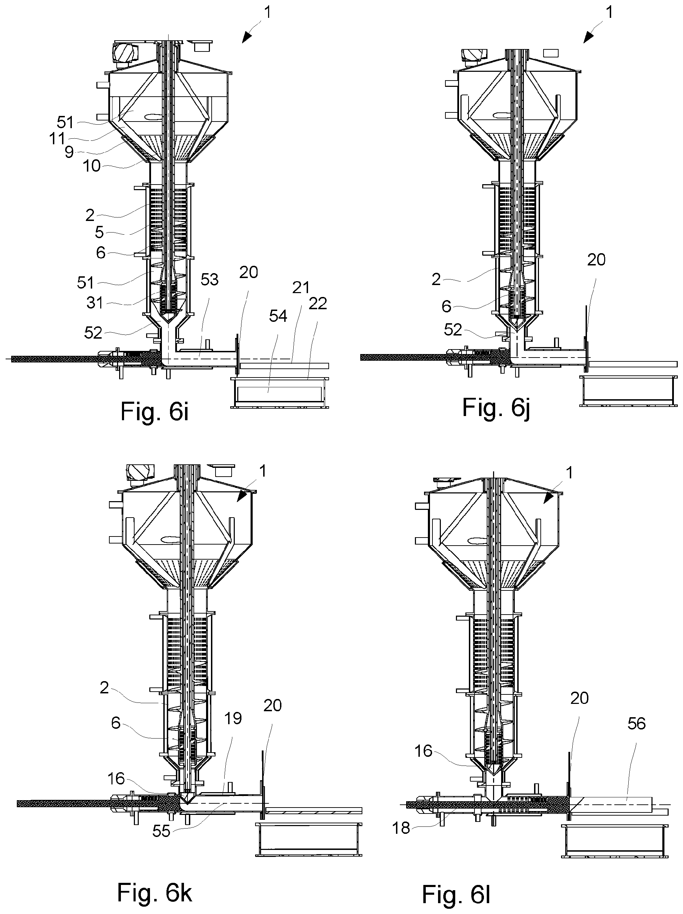

Referring now to Figs. 6a-6m, operation of the whey draining apparatus 1 is shown for producing blocks of cheese. Fig. 6a shows a first step in which the whey draining apparatus 1 is filled with whey only. Whey 50 is filled in the upright drainage column 2 and the buffer tank 9. The cutting tool 20 is in a closed position and the pusher 18 is in the blocking position in which the blocking section 41 blocks the outlet 4. The auger 6 is in an initial position and may start to rotate.

Fig. 6b shows a second step in which curd sedimentation occurs. Curd particles are added to the whey draining apparatus 1 to form a mixture of curd and whey 51 in the upright drainage column 2 and the buffer tank 9. The perforated conical section 10 of the buffer tank 9 and the perforated section 5 of the upright drainage column 2 are activated to drain whey from the mixture of curd and whey 51. The auger 6 continues to rotate and compacted curd 52 is pushed down by the auger 6 toward the outlet 4 of the upright drainage column 2. The pusher 18 remains in the blocking position such that the outlet 4 is closed.

Fig. 6c shows a third step in which draining by the pusher 18 and the auger 6 occurs. The pusher 18 is moved to the draining position in which the perforated section 40 is in communication with the outlet 4 for further draining whey from the compacted curd 52. The drained whey is removed from the whey draining apparatus 1 via the whey removing zone 43 of the pusher 18. The perforated peripheral surface 31 of the auger 6 is activated for draining whey to the inside of the auger 6 to be drawn upwardly and out of the whey draining apparatus 1 by a vacuum.

Fig. 6d shows a fourth step in which the cheese is compacted. The auger 6 starts to move upwardly in the upright drainage column 2, such that more compacted curd 52 is formed below the auger 6. The agitator 11 remains active in Figs. 6b-6d. Whey draining continues via the perforated peripheral surface 31 of the auger 6, the perforated conical section 10 of the buffer tank 9, the perforated section 5 of the upright drainage column 2, and the perforated section 40 of the pusher 18.

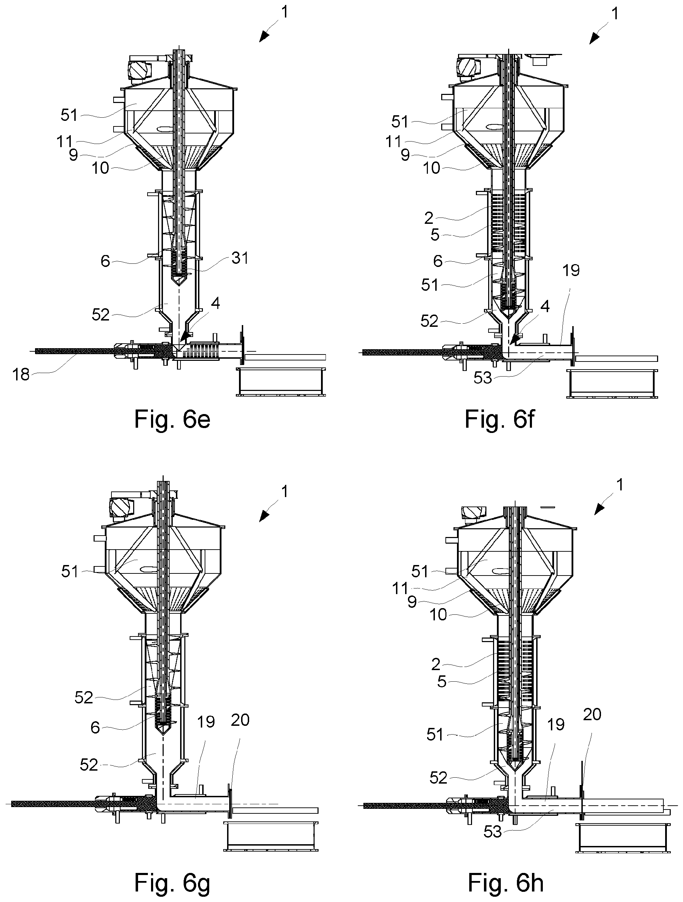

Fig. 6e shows a fifth step that occurs prior to extrusion of the cheese. The pusher 18 is moved out of the blocking position to open the outlet 4 for extrusion of the cheese. The auger 6 is moved upwardly and rotation of the auger 6 is stopped. Whey draining continues via the perforated peripheral surface 31 of the auger 6, the perforated conical section 10 of the buffer tank 9, and the perforated section 5 of the upright drainage column 2.

Fig. 6f shows a sixth step in which compacted curd 53 that has been extruded from the upright drainage column 2 enters the perforated tube 19. The auger 6 returns to its initial position (shown in Fig. 6a) and rotation of the auger 6 is stopped. The auger 6 is moved downwardly from its previous position shown in Fig. 6e to move the compacted curd 52 in the upright drainage column 2 out of the outlet 4. The perforated tube 19 is activated for draining. Whey draining also occurs via the perforated conical section 10 of the buffer tank 9 and the perforated section 5 of the upright drainage column 2. The agitator 11 remains active in the steps shown in Figs. 6e and 6f.

Fig. 6G shows a seventh step in which the auger 6 is moved upwardly to a dosing position. The auger 6 may be continuously moved upwardly and downwardly, and the movement of the auger 6 may correspond to the desired type of cheese to be produced. The speed of rotation of the auger 6 and the linear movement of the auger 6 may correspond to each other. The cutting tool 20 remains in a closed position.

Fig. 6h shows an eighth step in which the cutting tool 20 is opened in preparation to cut the extruded cheese 53 and form a cut-off block of cheese. In both of the steps shown in Figs. 6G and 6h, whey draining continues via the perforated conical section 10 of the buffer tank 9, the perforated section 5 of the upright drainage column 2, and the perforated tube 19. The agitator 11 also remains active.

Fig. 6i shows a ninth step in which the cutting tool 20 is closed to cut the extruded cheese 53. The shutter plate 21 is arranged downstream the cutting tool 20 and is opened to receive the cut-off block of cheese 54. The cut-off block of cheese 54 is then dropped into the mold 22 for further downstream processing, such as packaging. Whey draining via the perforated peripheral surface 31 of the auger 6 is activated. Whey draining continues via the perforated conical section 10 of the buffer tank 9 and the perforated section 5 of the upright drainage column 2. The agitator 11 also remains active.

Fig. 6j shows a tenth step in which all of the whey is removed from the upright drainage column 2. The auger 6 is moved downwardly into an emptying position to push a remaining amount of the compacted curd 52 out of the upright drainage column 2. The cutting tool 20 is in an open position. The agitator and draining sections are inactive.

Fig. 6k shows an eleventh step in which the plunger 16 is activated and descends lower in the upright drainage column 2 relative to the auger 6 to push the remaining amount of the compacted curd 55 out of the upright drainage column 2. The remaining amount of the compacted curd 55 is pushed into the perforated tube 19. The cutting tool 20 is in the open position.

Fig. 6I shows a twelfth step in which the plunger 16 is moved upwardly to return to its initial position and the cutting tool 20 remains in the open position. The pusher 18 is activated to push a final block of cheese 56 out of the perforated tube 19 and downstream for further processing.

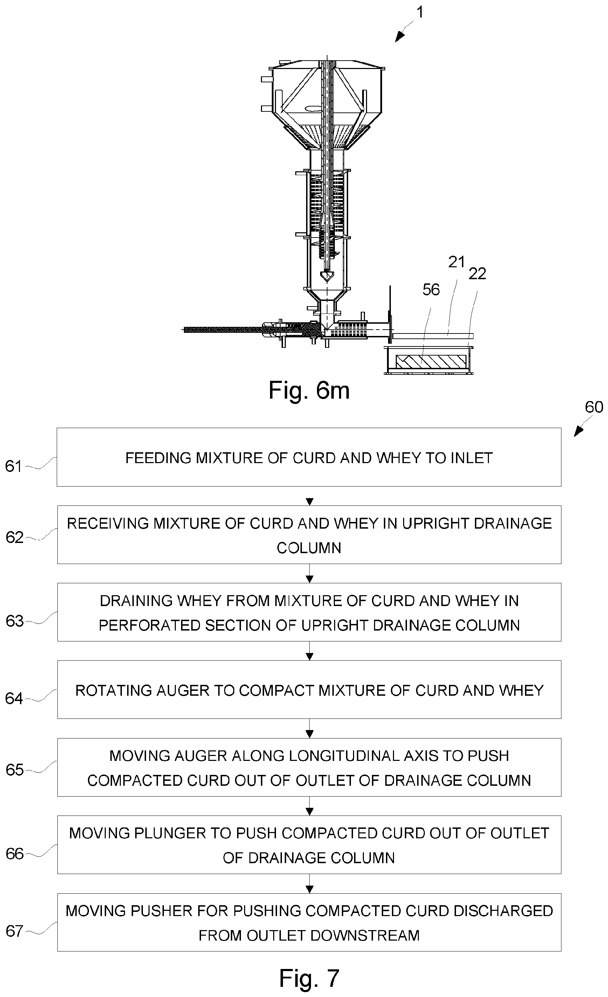

Fig. 6m shows a thirteenth step in which the shutter 21 is opened and the final block of cheese 56 is dropped into the mold 22. After the final block of cheese 56 is removed from the whey draining apparatus 1, a clean-in-place system may be activated and the whey draining apparatus 1 may be cleaned to remove any excess cheese in the whey draining apparatus 1.

Referring now to Fig. 7, a method 60 of draining whey using the whey draining apparatus 1 is shown. The method 60 includes a step 61 of feeding the mixture of curd and whey 51 to the feed inlet 3 of the whey draining apparatus 1 and step 62 includes receiving the mixture of curd and whey 51 in the upright drainage column 2. Step 63 includes draining whey from the mixture of curd and whey 51 in the perforated section 5 of the upright drainage column 2. Step 64 of the method 60 includes rotating the auger 6 around the longitudinal axis L of the upright drainage column 2 to compact the mixture of curd and whey 51 in the upright drainage column 2. Step 65 of the method 60 includes moving the auger 6 along the longitudinal axis L to push compacted curd 52 that is drained of whey through the outlet 4 out of the upright drainage column 2.

Step 66 of the method 60 includes moving the plunger 16 along the longitudinal axis L inside the auger 6 to push the compacted curd 52 out of the upright drainage column 2. Step 67 of the method 60 includes moving the pusher 18 arranged proximate the outlet 4 for pushing the compacted curd 52 discharged from the outlet 4 downstream.

In the above, embodiments have been described with reference to one or more preferred features, which features have been set forth in considerable detail for the purposes of making a complete disclosure. The scope of the invention, therefore, shall be defined solely by the following claims.

## Claims

1. A whey draining apparatus (1) for the production of blocks of cheese mass, the whey draining apparatus (1) comprising:
a feed inlet (3) for a mixture of curd and whey (51); and
an upright drainage column (2) configured to receive the mixture of curd and whey (51), the upright drainage column (2) having an outlet (4) and a perforated section (5) for draining whey from the mixture of curd and whey (51),
an auger (6) arranged along a longitudinal axis (L) of the upright drainage column (2), the auger (6) configured for rotation about the longitudinal axis (L) to compact the mixture of curd and whey (51) in the upright drainage column (2), the auger (6) configured for movement along the longitudinal axis (L) to push compacted curd (52) that is drained of whey through the outlet (4) and out of the upright drainage column (2), **characterized in that**
the auger (6) has helical flights (14) arranged to move along the perforated section (5) of the upright drainage column (2).

2. The whey draining apparatus (1) according to claim 1, comprising a buffer tank (9) having a perforated conical section (10) arranged upstream the upright drainage column (2).

3. The whey draining apparatus (1) according to claim 2, comprising an agitator (11) that rotates along the perforated conical section (8) in the buffer tank (7).

4. The whey draining apparatus (1) according to any preceding claim, wherein the auger (6) has a hollow body (30) and a perforated peripheral surface (31) for draining whey from the mixture of curd and whey (51) to the inside of the hollow body (30).

5. The whey draining apparatus (1) according to any preceding claim, comprising a plunger (16) arranged to move along the longitudinal axis (L) inside the auger (6) to push the compacted curd (52) out of the upright drainage column (2), wherein the plunger (16) descends lower in the upright drainage column (2) relative to the auger (6).

6. The whey draining apparatus (1) according to claim 5, wherein the plunger (16) has a hollow body (34) defining a whey-draining channel (35).

7. The whey draining apparatus (1) according to any preceding claim, comprising a pusher (18) arranged proximate the outlet (4) for pushing compacted curd (52) that is discharged from the outlet (4) downstream, wherein the pusher (18) has a perforated section (40) for draining whey and a blocking section (41) for blocking the outlet (4) of the upright drainage column (2).

8. The whey draining apparatus (1) according to claim 7, wherein the pusher (18) is arranged perpendicularly relative to the upright drainage column (2).

9. The whey draining apparatus (1) according to claim 7 or 8, comprising a perforated tube (19) configured to receive the compacted curd (52) from the outlet (4) and arranged downstream the pusher (18).

10. The whey draining apparatus (1) according to claim 9, comprising an angular channel (42) connected between the outlet (4) and the perforated tube (19).

11. The whey draining apparatus (1) according to any preceding claim, comprising a first motor (7) that rotates the auger (6) and a second motor (8) that axially moves the auger (6).

12. A method (60) of draining whey from a mixture of curd and whey (51) with an apparatus according to claim 1, comprising:
feeding (61) the mixture of curd and whey (51) to the feed inlet (3);
receiving (62) the mixture of curd and whey (51) in the upright drainage column (2) arranged downstream the feed inlet (3); and
draining (63) whey from the mixture of curd and whey (51) in the perforated section (5) of the upright drainage column (2),
rotating (64) the auger (6), the auger (6) having helical flights (14) arranged to move along the perforated section (5) of the upright drainage column (2), around a longitudinal axis (L) of the upright drainage column (2) to compact the mixture of curd and whey (51) in the upright drainage column (2); and
moving (65) the auger (6) along the longitudinal axis (L) to push compacted curd (52) that is drained of whey through an outlet (4) out of the upright drainage column (2).

13. The method (60) according to claim 12, comprising moving (66) a plunger (16) along the longitudinal axis (L) inside the auger (6) to push the compacted curd (52) out of the upright drainage column (2), wherein the plunger (16) is configured to descend lower in the upright drainage column (2) relative to the auger (6).

14. The method (60) according to claim 12 or 13, comprising moving (67) a pusher (18) arranged proximate the outlet (4) for pushing the compacted curd (52) discharged from the outlet (4) downstream, wherein the pusher (18) has a perforated section (40) and a blocking section (41).

## Patentansprüche

1. Molkeentwässerungsvorrichtung (1) zur Herstellung von Blöcken aus Käsemasse, wobei die Molkeentwässerungsvorrichtung (1) Folgendes umfasst:
einen Speiseeinlass (3) für eine Mischung aus Quark und Molke (51); und
eine aufrechtstehende Entwässerungssäule (2), die dazu ausgelegt ist, die Mischung aus Quark und Molke (51) aufzunehmen, wobei die aufrechtstehende Entwässerungssäule (2) einen Auslass (4) und einen perforierten Abschnitt (5) zum Entwässern von Molke aus der Mischung aus Quark und Molke (51) aufweist,
eine Förderschnecke (6), die entlang einer Längsachse (L) der aufrechtstehenden Entwässerungssäule (2) angeordnet ist, wobei die Förderschnecke (6) zur Rotation um die Längsachse (L) ausgelegt ist, um die Mischung aus Quark und Molke (51) in der aufrechtstehenden Entwässerungssäule (2) zu verdichten, wobei die Förderschnecke (6) zur Bewegung entlang der Längsachse (L) ausgelegt ist, um verdichteten, von Molke befreiten Quark (52) durch den Auslass (4) aus der aufrechtstehenden Entwässerungssäule (2) zu drücken, **dadurch gekennzeichnet, dass**
die Förderschnecke (6) spiralförmige Gänge (14) aufweist, die dazu angeordnet sind, sich entlang des perforierten Abschnitts (5) der aufrechtstehenden Entwässerungssäule (2) zu bewegen.

2. Molkeentwässerungsvorrichtung (1) nach Anspruch 1, umfassend einen Pufferbehälter (9) mit einem perforierten konischen Abschnitt (10), der stromaufwärts der aufrechtstehenden Entwässerungssäule (2) angeordnet ist.

3. Molkeentwässerungsvorrichtung (1) nach Anspruch 2, umfassend ein Rührwerk (11), das sich entlang des perforierten konischen Abschnitts (8) im Pufferbehälter (7) dreht.

4. Molkeentwässerungsvorrichtung (1) nach einem der vorhergehenden Ansprüche, wobei die Förderschnecke (6) einen Hohlkörper (30) und eine perforierte Umfangsfläche (31) zum Entwässern von Molke aus der Mischung aus Quark und Molke (51) zum Inneren des Hohlkörpers (30) aufweist.

5. Molkeentwässerungsvorrichtung (1) nach einem der vorhergehenden Ansprüche, umfassend einen Kolben (16), der angeordnet ist, um sich entlang der Längsachse (L) innerhalb der Förderschnecke (6) zu bewegen, um den verdichteten Quark (52) aus der aufrechtstehenden Entwässerungssäule (2) herauszudrücken, wobei der Kolben (16) in der aufrechtstehenden Entwässerungssäule (2) relativ zur Förderschnecke (6) tiefer sinkt.

6. Molkeentwässerungsvorrichtung (1) nach Anspruch 5, wobei der Kolben (16) einen Hohlkörper (34) aufweist, der einen Molkeentwässerungskanal (35) definiert.

7. Molkeentwässerungsvorrichtung (1) nach einem der vorhergehenden Ansprüche, umfassend einen Schieber (18), der nahe dem Auslass (4) angeordnet ist, um verdichteten Quark (52) zu drücken, der aus dem Auslass (4) stromabwärts abgegeben wird, wobei der Schieber (18) einen perforierten Abschnitt (40) zum Entwässern von Molke und einen Sperrabschnitt (41) zum Sperren des Auslasses (4) der aufrechtstehenden Entwässerungssäule (2) aufweist.

8. Molkeentwässerungsvorrichtung (1) nach Anspruch 7, wobei der Schieber (18) senkrecht zur aufrechtstehenden Entwässerungssäule (2) angeordnet ist.

9. Molkeentwässerungsvorrichtung (1) nach Anspruch 7 oder 8, umfassend ein perforiertes Rohr (19), das dazu ausgelegt ist, den verdichteten Quark (52) aus dem Auslass (4) aufzunehmen, und das stromabwärts des Schiebers (18) angeordnet ist.

10. Molkeentwässerungsvorrichtung (1) nach Anspruch 9, umfassend einen Winkelkanal (42), der zwischen dem Auslass (4) und dem perforierten Rohr (19) verbunden ist.

11. Molkeentwässerungsvorrichtung (1) nach einem der vorhergehenden Ansprüche, umfassend einen ersten Motor (7), der die Förderschnecke (6) dreht, und einen zweiten Motor (8), der die Förderschnecke (6) axial bewegt.

12. Verfahren (60) zum Entwässern von Molke aus einer Mischung aus Quark und Molke (51) mit einer Vorrichtung nach Anspruch 1, umfassend:
Zuführen (61) der Mischung aus Quark und Molke (51) zum Speiseeinlass (3);
Aufnehmen (62) der Mischung aus Quark und Molke (51) in der aufrechtstehenden Entwässerungssäule (2), die stromabwärts des Speiseeinlasses (3) angeordnet ist; und
Entwässern (63) der Molke aus der Mischung aus Quark und Molke (51) im perforierten Abschnitt (5) der aufrechtstehenden Entwässerungssäule (2).
Drehen (64) der Förderschnecke (6), wobei die Förderschnecke (6) spiralförmige Gänge (14) aufweist, die so angeordnet sind, dass sie sich entlang des perforierten Abschnitts (5) der aufrechtstehenden Entwässerungssäule (2) um eine Längsachse (L) der aufrechtstehenden Entwässerungssäule (2) bewegen, um die Mischung aus Quark und Molke (51) in der aufrechtstehenden Entwässerungssäule (2) zu verdichten; und
Bewegen (65) der Förderschnecke (6) entlang der Längsachse (L), um verdichteten Quark (52), der von Molke entwässert ist, durch einen Auslass (4) aus der aufrechtstehenden Entwässerungssäule (2) zu drücken.

13. Verfahren (60) nach Anspruch 12, umfassend das Bewegen (66) eines Kolbens (16) entlang der Längsachse (L) innerhalb der Förderschnecke (6), um den verdichteten Quark (52) aus der aufrechtstehenden Entwässerungssäule (2) herauszudrücken, wobei der Kolben (16) dazu ausgelegt ist, in der aufrechtstehenden Entwässerungssäule (2) relativ zur Förderschnecke (6) tiefer abzusinken.

14. Verfahren (60) nach Anspruch 12 oder 13, umfassend das Bewegen (67) eines Schiebers (18), der nahe dem Auslass (4) angeordnet ist, um den verdichteten Quark (52), der aus dem Auslass (4) ausgestoßen wird, stromabwärts zu schieben, wobei der Schieber (18) einen perforierten Abschnitt (40) und einen Sperrabschnitt (41) aufweist.

## Revendications

1. Appareil de drainage de lactosérum (1) destiné à la production de blocs de masse de fromage, l'appareil de drainage de lactosérum (1) comprenant :
une entrée d'alimentation (3) pour un mélange de caillé et de lactosérum (51) ; et
une colonne de drainage verticale (2) conçue pour recevoir le mélange de caillé et de lactosérum (51), la colonne de drainage verticale (2) comportant une sortie (4) et une section perforée (5) pour drainer le lactosérum du mélange de caillé et de lactosérum (51),
une vis sans fin (6) disposée le long d'un axe longitudinal (L) de la colonne de drainage verticale (2), la vis sans fin (6) étant conçue pour tourner autour de l'axe longitudinal (L) pour compacter le mélange de caillé et de lactosérum (51) dans la colonne de drainage verticale (2), la vis sans fin (6) étant conçue pour se déplacer le long de l'axe longitudinal (L) pour pousser le caillé compacté (52) duquel est drainé le lactosérum à travers la sortie (4) et hors de la colonne de drainage verticale (2), **caractérisé en ce que**
la vis sans fin (6) présente des filets hélicoïdaux (14) conçus pour se déplacer le long de la section perforée (5) de la colonne de drainage verticale (2).

2. Appareil de drainage de lactosérum (1) selon la revendication 1, comprenant un réservoir tampon (9) présentant une section conique perforée (10) disposée en amont de la colonne de drainage verticale (2).

3. Appareil de drainage de lactosérum (1) selon la revendication 2, comprenant un agitateur (11) qui tourne le long de la section conique perforée (8) dans le réservoir tampon (7).

4. Appareil de drainage de lactosérum (1) selon l'une quelconque des revendications précédentes, la vis sans fin (6) présentant un corps creux (30) et une surface périphérique perforée (31) pour drainer le lactosérum du mélange de caillé et de lactosérum (51) vers l'intérieur du corps creux (30).

5. Appareil de drainage de lactosérum (1) selon l'une quelconque des revendications précédentes, comprenant un piston (16) conçu pour se déplacer le long de l'axe longitudinal (L) à l'intérieur de la vis sans fin (6) pour pousser le caillé compacté (52) hors de la colonne de drainage verticale (2), le piston (16) descendant plus bas dans la colonne de drainage verticale (2) par rapport à la vis sans fin (6).

6. Appareil de drainage de lactosérum (1) selon la revendication 5, le piston (16) comportant un corps creux (34) définissant un canal de drainage de lactosérum (35).

7. Appareil de drainage de lactosérum (1) selon l'une quelconque des revendications précédentes, comprenant un poussoir (18) disposé à proximité de la sortie (4) pour pousser le caillé compacté (52) qui est évacué par la sortie (4) en aval, le poussoir (18) comportant une section perforée (40) pour drainer le lactosérum et une section de blocage (41) pour bloquer la sortie (4) de la colonne de drainage verticale (2).

8. Appareil de drainage de lactosérum (1) selon la revendication 7, le poussoir (18) étant disposé perpendiculairement par rapport à la colonne de drainage verticale (2).

9. Appareil de drainage de lactosérum (1) selon la revendication 7 ou 8, comprenant un tube perforé (19) conçu pour recevoir le caillé compacté (52) provenant de la sortie (4) et disposé en aval du poussoir (18).

10. Appareil de drainage de lactosérum (1) selon la revendication 9, comprenant un canal angulaire (42) relié entre la sortie (4) et le tube perforé (19).

11. Appareil de drainage de lactosérum (1) selon l'une quelconque des revendications précédentes, comprenant un premier moteur (7) qui fait tourner la vis sans fin (6) et un second moteur (8) qui déplace axialement la vis sans fin (6).

12. Procédé (60) de drainage de lactosérum du mélange de caillé et de lactosérum (51) à l'aide d'un appareil selon la revendication 1, comprenant les étapes consistant à :
alimenter (61) l'entrée d'alimentation (3) en mélange de caillé et de lactosérum (51) ;
recevoir (62) le mélange de caillé et de lactosérum (51) dans la colonne de drainage verticale (2) disposée en aval de l'entrée d'alimentation (3) ; et
drainer (63) le lactosérum du mélange de caillé et de lactosérum (51) dans la section perforée (5) de la colonne de drainage verticale (2),
faire tourner (64) la vis sans fin (6), la vis sans fin (6) présentant des filets hélicoïdaux (14) conçus pour se déplacer le long de la section perforée (5) de la colonne de drainage verticale (2), autour d'un axe longitudinal (L) de la colonne de drainage verticale (2) pour compacter le mélange de caillé et de lactosérum (51) dans la colonne de drainage verticale (2) ; et
déplacer (65) la vis sans fin (6) le long de l'axe longitudinal (L) pour pousser le caillé compacté (52) duquel est drainé le lactosérum à travers une sortie (4) hors de la colonne de drainage verticale (2).

13. Procédé (60) selon la revendication 12, comprenant l'étape consistant à déplacer (66) un piston (16) le long de l'axe longitudinal (L) à l'intérieur de la vis sans fin (6) pour pousser le caillé compacté (52) hors de la colonne de drainage verticale (2), le piston (16) étant conçu pour descendre plus bas dans la colonne de drainage verticale (2) par rapport à la vis sans fin (6).

14. Procédé (60) selon la revendication 12 ou 13, comprenant l'étape consistant à déplacer (67) un poussoir (18) disposé à proximité de la sortie (4) pour pousser le caillé compacté (52) évacué par la sortie (4) en aval, le poussoir (18) comportant une section perforée (40) et une section de blocage (41).
